# EUROPÄISCHE PATENTSCHRIFT

(11) **EP 1 614 705 B1**
(45) Veröffentlichungstag und Bekanntmachung des Hinweises auf die Patenterteilung: **12.09.2007**
(21) Anmeldenummer: 05014408.8
(22) Anmeldetag: 02.07.2005
(51) Int. Cl.: C08G 77/445, C08L 83/04, C08L 101/00, C09D 183/10, C09D 7/06, C09D 7/12, D01F 6/26

(54) **Polyestermodifizierte Polysiloxane und deren Verwendung als Additive für Thermoplaste, Formmassen und Lacke**
Polyester modified polysiloxanes and their use as additives for thermoplastics, moulding compounds and lacquers
Polysiloxanes modifiés par polyester et leur utilisation comme additives pour matières thermoplastiques, masses à mouler et vernis

(30) Priorität: 08.07.2004 DE 102004033060
(43) Veröffentlichungstag der Anmeldung: 11.01.2006
(73) Patentinhaber: Byk-Chemie GmbH, 46483 Wesel (DE)
(72) Erfinder: Haubennestel, Karlheinz, 46487 Wesel (DE); Bubat, Alfred, 46487 Wesel (DE); Bögershausen, Hans-Willi, 47918 Tönisvorst (DE); Griesel, Wolfgang, 46499 Hamminkeln (DE); Nolte, Ulrich, Dr., 46485 Wesel (DE)
(74) Vertreter: Leifert & Steffan

(56) Entgegenhaltungen:
- EP-A- 0 175 092
- EP-A- 0 473 812
- EP-A- 0 548 452
- US-A- 3 691 257
- US-A- 5 417 867

## Beschreibung

Die Erfindung betrifft polyestermodifizierte Polysiloxane, sowie deren Einsatz in Thermoplasten, Lacken und Formmassen, die hierdurch in ihrer Kratzfestigkeit, Gleitfähigkeit und hinsichtlich ihrer hydrophoben Eigenschaften stark verbessert sind.

Aus DE-C-1111320 und DE-C-1092585 ist es bekannt, Lacken niedermolekulare Dimethylpolysiloxane und Methylphenylpolysiloxane zuzusetzen, um ihre Verlaufeigenschaften zu verbessern und ihre Kratzfestigkeit und Gleitfähigkeit zu erhöhen. Die Zugabe von Polydimethylsiloxanen führt jedoch in vielen Fällen zu unerwünschten Trübungen in unpigmentierten Beschichtungsstoffen sowie zu schlechten Verlaufeigenschaften, was sich in einer sogenannten Narbung bemerkbar macht. Wenn die Molekulargewichte der reinen Polydimethylsiloxane zu hoch gewählt werden, treten starke Störungen in den Beschichtungsstoffen auf, die als Krater oder sogenannte Fischaugen erkennbar sind.

Polymethylphenylsiloxane sind zwar in den Beschichtungsstoffen meist gut verträglich und führen auch zu einer Verbesserung der Verlaufeigenschaften der Lacke, denen sie zugesetzt werden, die damit erzielbare Kratzfestigkeit ist jedoch unzureichend.

Die Unverträglichkeiten, die durch Siloxane in Lacksystemen auftreten, werden in ähnlicher Weise auch in Thermoplasten festgestellt.

In EP 0 175 092 B1 ist beschrieben, daß polyestermodifizierte Siloxane die Kratzbeständigkeit und die Gleitfähigkeit von Lacken und Formmassen, bei gleichzeitiger guter Verträglichkeit und ausgezeichneter Temperaturbeständigkeit erhöhen. Es handelt sich hierbei um verzweigte polyestermodifizierte Polysiloxane mit Polyestergruppierungen in der Seitenkette.

In EP 0 217 364 B1 werden Verbindungen beschrieben, die einen ähnlichen Aufbau besitzen, wie die aus der EP 0 175 092 B1 bekannten, jedoch nicht zwingend eine Seitengruppe tragen und darüber hinaus reaktive Endgruppen, wie Hydroxylgruppen, Carboxylgruppen, Isocyanatgruppen oder vinylische Gruppen umfassen.

Überraschenderweise wurde gefunden, daß polyestermodifizierte Polysiloxane mit XY-Blockstruktur, wobei Block X aus einem Polyester und Block Y aus einem Polysiloxan besteht, und einer von reaktiven Gruppen freien Endgruppe eine drastisch erhöhte Wirksamkeit hinsichtlich Gleitfähigkeit, Kratzfestigkeit und Hydrophobierung der diese Verbindungen enthaltenden Endprodukte im Vergleich zu den Verbindungen des Stands der Technik aufweisen.

Gegenstand der Erfindung sind somit polyestermodifizierte Polysiloxane der allgemeinen Formel (I): 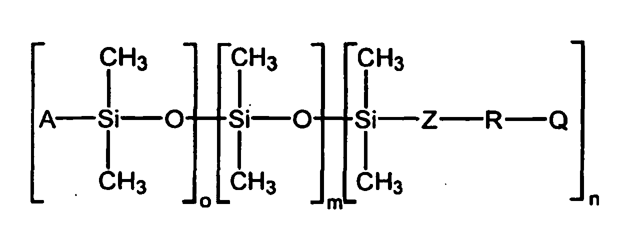 wobei,
A eine Alkylgruppe mit 1 bis 8 Kohlenstoffatomen darstellt, Z eine aliphatische Gruppe mit 1 bis 14 Kohlenstoffatomen darstellt, R eine mindestens 3 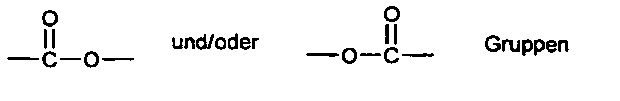 enthaltende aliphatische und/oder cycloaliphatische und/oder aromatische Polyestergruppe mit einem gewichtsmittleren Molekulargewicht von 200 bis 4000 g/mol ohne Zerewitinoff Wasserstoffatome darstellt, Q eine Gruppe darstellt, die keine Zerewitinoff-Wasserstoffatome enthält und frei von reaktiven Kohlenstoff-Kohlenstoff-Mehrfachbindungen ist, und wobei m gleich 3 bis 200 und o + n = 2 ist, wobei sowohl o als auch n ungleich Null sind.

Die Gruppe A unterliegt hierbei keinen generellen Beschränkungen und kann eine lineare oder verzweigte Alkylgruppe, wie zum Beispiel Methyl, Ethyl, n-Propyl, isoPropyl, tert.-Butyl, Butyl, Pentyl, Hexyl, Heptyl oder Octyl sein. Insbesondere sind lineare Alkylgruppen mit 1 bis 4 Kohlenstoffatomen bevorzugt.

Z stellt eine aliphatische Gruppe mit 1 bis 14 Kohlenstoffatomen dar, insbesondere eine Alkylengruppe mit 1 bis 14 Kohlenstoffatomen, eine Alkylenether- oder Alkylenthioether-Gruppe mit 2 bis 14 Kohlenstoffatomen oder eine Alkylen-Amid-Gruppe mit 2 bis 14 Kohlenstoffatomen. Der Sauerstoff oder Schwefel in einer Alkylenether oder Alkylenthioethergruppe kann an beliebiger Stelle in der 2 bis 14 Kohlenstoffatome enthaltenden Kette stehen. Gleiches gilt für die Amidgruppierung in einem Alkylenamid (beispielsweise -(CH₂)₃NHCO-). Die Gruppe Z dient maßgeblich dazu, das Siliciumatom des Polysiloxan-Bestandteils mit der Gruppe R zu verbinden Vorzugsweise steht die Gruppe Z für -(CH₂)₃-O-(CH₂)₂- oder -(CH₂)₂-O-(CH₂)₄- oder die entsprechenden Thioether.

Für die Gruppe R gilt, daß es sich hierbei um eine mindestens 3 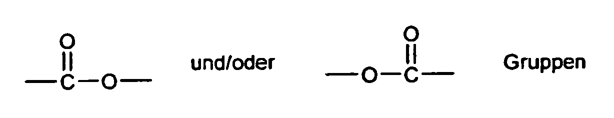 enthaltende aliphatische und/oder cycloaliphatische und/oder aromatische Polyestergruppe mit einem gewichtsmittleren Molekulargewicht von 200 bis 4000 g/mol handelt, die keine Zerewitinoff Wasserstoffatome enthält. Vorzugsweise sind die mindestens 3 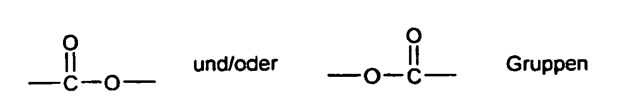 durch zweiwertige Kohlenwasserstoffgruppen mit 2 bis 12 Kohlenstoffatomen, noch bevorzugter 4 bis 6 Kohlenstoffatomen miteinander verbunden sind. Solche Gruppen lassen sich beispielsweise durch Polymerisation von Lactonen, wie Propiolacton, Caprolacton, Valerolacton oder Dodecalacton, sowie deren Derivaten erzeugen. Besonders bevorzugt sind gesättigte aliphatische Kohlenwasserstoffgruppen mit 5 Kohlenstoffatomen. Solche Gruppen lassen sich vorzugsweise durch Polymerisation von ε-Caprolacton bilden.

Als aromatische Polyestergruppen kommen beispielsweise solche auf Phthalsäureanhydridbasis in Frage, insbesondere dann, wenn die resultierenden polyestermodifizierten Polysiloxane in Lacken eingesetzt werden sollen, die Bindemittel auf Basis von Phthalsäureestern enthalten.

Durch Wahl geeigneter Bausteine für die Gruppe R läßt sich eine breite Verträglichkeit der erfindungsgemäßen Verbindungen gegenüber einer Vielzahl verschiedener Polymersysteme erreichen. Insbesondere läßt sich durch die mögliche Auswahl zwischen aliphatischen, cycloaliphatischen (wie beispielsweise Cyclohexandiyl) und aromatischen (wie beispielsweise Phenylen) Bestandteilen der Gruppe R die Polarität der Verbindungen steuern und so gezielt auf den jeweiligen Einsatzzweck abstimmen. Die Synthese solcher Polymere ist dem Durchschnittsfachmann auf dem Gebiet der Lack- und Kunststoffindustrie hinreichend bekannt.

Q ist eine Gruppe, die keine Wasserstoffatome nach Zerewitinoff enthält und frei von reaktiven Kohlenstoff-Kohlenstoff-Mehrfachbindungen ist. Q kann insbesondere durch einen Rest -(O)-(CO)ₚ-(NH)_{q}-(CHR¹)ᵣ-(CHR²)ₛ-(O)ₜ-CR³R⁴R⁵ dargestellt werden, worin p, q, r, s und t unabhängig voneinander 0 oder 1 sind und worin R¹, R², R³, R⁴ und R⁵ unabhängig voneinander H oder einen linearen oder verzweigten Alkylrest mit 1 bis 18 Kohlenstoffatomen bedeuten oder R¹ und R³ (im Fall von p=q=0) zusammen einen divalenten Rest -CH₂-CH₂- bilden. Vorzugsweise sind zwei der Reste R³, R⁴ und R⁵ Wasserstoff.

Wenn p=q=r=s=t=0 ist, handelt es sich bei Q um eine Alkoxygruppe. Für den Fall, daß p=1 und q=r=s=t=0 ist, dann ist Q eine Carbonsäureestergruppe. Wenn p=q=1 und r=s=t=0 ist, dann ist die Gruppe Q eine Urethangruppe. Für den Fall, daß p=q=0 und r=s=t=1 ist, dann handelt es sich bei Q um eine beispielsweise durch Enol-Endcapping einer endständig an R gebundenen OH-Gruppe gebildete Oxyalkylenethergruppe. Im allgemeinen gilt, daß Q aus einer Reaktion mit einer endständig an R gebundenen OH-Gruppe ableitbar ist. Die oben erwähnte Carbonsäureestergruppe wäre somit durch Reaktion einer endständig an R gebundenen OH-Gruppe mit einer Carbonsäure, einem Carbonsäureanhydrid, einem Carbonsäurechlorid oder durch Reaktion mit anderen aktivierten Carbonsäurederivaten erzeugbar, während die Urethangruppe durch Reaktion mit einem Isocyanat gebildet werden kann.

Wenn im Sinne der Erfindung gefordert wird, daß die polyestermodifizierten Polysiloxane in den Reste R und Q keine Zerewitinoff-Wasserstoffatome enthalten sollen, so wird darunter verstanden, daß diese Forderung im wesentlichen erfüllt ist. Eine geringe Anzahl an Zerewitinoff Wasserstoffatomen im eingesetzten polyestermodifizierten Polysiloxan stört nicht. Da bei der Synthese der erfindungsgemäßen Polysiloxane üblicherweise von Verbindungen ausgegangen wird, die Zerewitinoff-Wasserstoffatome enthalten und der Umsetzungsgrad zum Endprodukt nur im Idealfall 100 % beträgt, dürfen im industriell eingesetzten Produkt bis zu einem gewissen Umfang nicht umgesetzte Vorstufen enthalten sein. Der Umsetzungsgrad hinsichtlich der Zerewitinoff-Wasserstoffatome der Zwischenprodukte sollte jedoch möglichst 80 %, besser 90 %, am besten 95 bis 100 % aller Zerewitinoff-Wasserstoffatome umfassen.

Die Werte für o und n summieren sich auf 2, wobei vorzugsweise o und n jeweils nicht mehr als 0,5, bevorzugter nicht mehr als 0,25 vom Wert 1 abweichen und am bevorzugtesten o=n=1 ist. Für den Fall, daß o=n=1 ist, handelt es sich um die bevorzugten reinen linearen monofunktionellen Produkte, die wie unten beschrieben darstellbar sind. Eine weitere unten dargestellte Möglichkeit der Herstellung stellt die Äquilibrierung dar, wobei neben nichtfunktionelle Produkten auch mono- und difunktionelle Produkte erhalten werden. Sofern das durch Äquilibrierung erhaltene Produkt unterschiedliche Mengen nichtfunktioneller und difunktioneller Nebenprodukte enthält, werden von 1 abweichende Werte für o und n rechnerisch erhalten. Der Wert für n errechnet sich wie folgt: n = [(a mol-% nichtfunktionelles Polysiloxan) x 0 + (b mol-% monofunktionelles Polysiloxan) x 1 + (c mol-% difunktionelles Polysiloxan) x 2] / 100. So ergibt sich beispielsweise bei einem Gehalt von 14,06 mol-% nichtfunktionellem Polysiloxan, 46,88 mol-% monofunktionellem Polysiloxan und 39,06 mol-% difunktionellem Polysiloxan, rechnerisch ein Wert für n von 1,25 (i.e. n = (14,06 mol-% x 0 + 46,88 mol-% x 1 + 39,06 mol-% x 2) / 100 = 1,25).

Der Wert m soll zwischen 3 und 200 liegen, vorzugsweise zwischen 10 und 100 liegen.

Die Synthese der erfindungsgemäßen Verbindungen kann beispielsweise ausgehend von linearen monofunktionellen Polysiloxanen erfolgen. Die Herstellung solcher Polysiloxane kann beispielsweise über eine lebende anionische Polymerisation cyclischer Polysiloxane verlaufen. Dieses Verfahren ist unter anderem bei T. Suzuki in Polymer, 30 (1989) 333, beschrieben. Besagte Reaktion wird beispielhaft im Reaktionsschema 1 dargestellt.

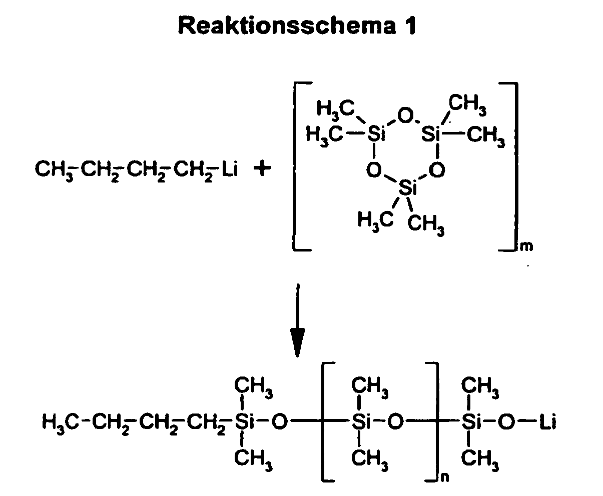

Die SiH(CH₃)₂-Funktionalisierung der Endgruppe kann nach den dem Durchschnittsfachmann bekannten Verfahren mit funktionellen Chlorsilanen, z.B. Dimethylchlorosilan, analog dem Reaktionsschema 2 erfolgen.

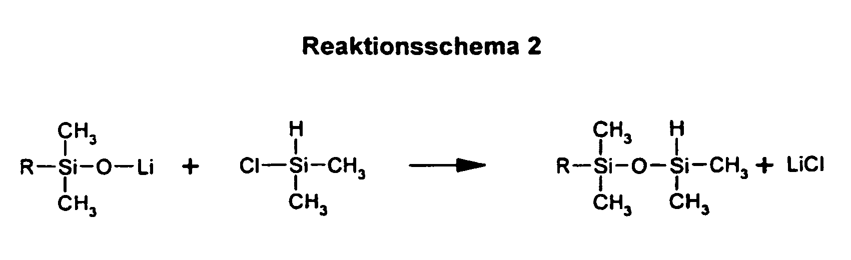

Eine weitere Möglichkeit zur Herstellung von linearen, monofunktionellen Polysiloxanen ist die Äquilibrierung von cyclischen und offenkettigen Polydimethylsiloxanen mit endständig Si-H difunktionellen Polydimethylsiloxanen wie bei Noll (Chemie und Technologie der Silicone, Wiley/VCH, Weinheim, 1984) beschrieben. Aus statistischen Gründen besteht das Reaktionsprodukt aus einer Mischung von cyclischen, difunktionellen, monofunktionellen und nicht funktionellen Siloxanen. Der Anteil an linearen Siloxanen im Reaktionsgemisch kann durch eine destillative Entfernung der niederen Zyklen erhöht werden. Innerhalb der linearen Polysiloxane sollte der Anteil SiH(CH₃)₂-monofunktioneller Polysiloxane im Reaktionsprodukt der Äquilibrierung möglichst hoch sein. Wenn Mischungen linearer Polysiloxane eingesetzt werden, so gilt für die Wirksamkeit der späteren erfindungsgemäßen Produkte, daß diese um so höher ist, je höher der Anteil der monofunktionellen erfindungsgemäßen Endprodukte ist. Beim Einsatz von Mischungen sollte der Anteil der monofunktionellen erfindungsgemäßen Endprodukte vorzugsweise der größte Anteil in der Mischung sein und bevorzugt mehr als 40 Gew.-% betragen. Typische an cyclischen Verunreinigungen abgereicherte Äquilibrierungsprodukte enthalten vorzugsweise weniger als 40 Gew.-% difunktioneller und weniger als 15 Gew.-% nichtfunktioneller linearer Polysiloxane, wobei insbesondere letztere weniger als 5 Gew.-%, am besten überhaupt nicht enthalten sind.

Um die erfindungsgemäß verwendeten polyestermodifizierten Siloxane herzustellen können die SiH(CH₃)₂-funktionellen Siloxane - wie den in Beispielen 4 und 5 beschrieben - mit endständig ungesättigten Polyestern, beispielsweise in Gegenwart von Pt-Katalysatoren zur Reaktion gebracht werden.

Eine Verknüpfung des Polysiloxan-Teil zur Herstellung der Zielverbindung kann jedoch auch nach beliebigen anderen Verfahren, wie sie beispielsweise in der EP 0 175 092 beschrieben sind, erfolgen. So kann beispielsweise von käuflich erhältlichen Verbindungen ausgegangen werden, bei denen der Polysiloxan-Teil über eine Gruppe -Z-OH mit dem Polyester-Teil zur Reaktion gebracht wird. Dies ist beispielsweise auch in den Beispielen 1 oder 6 gezeigt.

Gegenstand der Erfindung ist ferner ein Verfahren zur Erhöhung der Kratzfestigkeit und Erhöhung der Gleitfähigkeit von Thermoplasten und Lacken und Formmassen, das dadurch gekennzeichnet ist, daß den Thermoplasten, Formmassen und Lacken eine ausreichende Menge des polyestermodifizierten Siloxans der Formel (I) zugesetzt wird.

Weiterer Gegenstand der Erfindung sind Thermoplaste, Formmassen und Lacke mit einem den Verlauf fördernden und die Gleitfähigkeit erhöhenden Gehalt an erfindungsgemäßen polyestermodifizierten Polysiloxanen. Insbesondere war es überraschend, daß neben den stark verbesserten Eigenschaften der Formmassen und Lacke auch Thermoplaste, welche die erfindungsgemäßen polyestermodifizierten Polysiloxanen enthalten, von deren Wirksamkeit profitieren.

Thermoplaste im Sinne der Erfindung können Poly(meth)acrylate, Polyacrylnitril, Polystyrol, styrolische Kunststoffe (z.B. ABS, SEBS, SBS), Polyester, Polycarbonate, Polyethylenterephthalat, Polybutylenterephthalat, Polyamide, thermoplastische Polyurethane (TPU), Polyvinylchlorid, Polyoxymethylen, Polyethylen, Polypropylen sein. Die Thermoplaste können gefüllt und/oder pigmentiert sein. Unter Thermoplaste im Sinne der Erfindung fallen auch Mischungen (Blends) verschiedenartiger Thermoplaste. Bei den Thermoplasten kann es sich beispielsweise auch um dem Durchschnittsfachmann bekannte verspinnfähige thermoplastische Fasern handeln, wie beispielsweise Polyester- oder Polyamidfasern. Besonders bevorzugte Thermoplaste sind solche auf Basis von Poly(methylmethacrylat) (PMMA).

Lacke im Sinne dieser Erfindung können die verschiedensten Produkte sein. Es können Klarlacke, pigmentierte oder Farbstoffe enthaltende Lacke sein. Sie können Bindemittel der verschiedensten Art auf Basis physikalisch oder chemisch härtender bzw. trocknender Bindemittel enthalten. Beispiele für physikalisch trocknende Bindemittel sind solche auf Basis von Nitrocellulose, Acrylat-Methacrylat, Chlorkautschuk, PVC-Mischpolymerisaten, Polyvinylestern, Polystyrol, Polystyrolcopolymeren und Copolymeren des Butadiens. Beispiele für chemisch härtende bzw. trocknende Bindemittel sind lufttrocknende Alkydharze, Alkyd-Melamin-Harze, Acrylat-Melamin-Harze, Acrylat-Isocyanat-Harze (PUR-Harze), Epoxid-Harze, gesättigte und ungesättigte Polyester, Phenol-Formaldehyd-Harze und Harnstoff-Alkyd-Harze.

Als flüssige Phase können diese Lacke organische Lösungsmittel und/oder Wasser oder Weichmacher enthalten, wie dies in Abhängigkeit von den Bindemitteln auf diesem Gebiet des Stands der Technik bekannt ist. Die flüssige Phase kann auch in Form von Monomeren oder niedermolekularen Verbindungen vorliegen, die mit den anderen Bindemittelkomponenten unter Bildung der Lacküberzüge reagieren.

Die Lacke gemäß der Erfindung können auch sogenannte Pulverlacke sein, die also keine flüssige Phase enthalten und in Form von Pulvern auf die zu beschichtenden Substrate aufgebracht und dort zum Reagieren gebracht werden. Pulverlacke werden häufig im sogenannten elektrostatischen Auftragsverfahren aufgebracht.

Die Lacke gemäß der Erfindung haben also grundsätzlich die Zusammensetzung wie die bekannten Lacke, welche polyestermodifizierte Polysiloxane als Zusatzstoffe enthalten können. Sie können auch sonst übliche lacktechnische Zusatzstoffe enthalten, wie Netz- und Dispergiermittel, Füllstoffe, Katalysatoren und/oder Beschleuniger für die Härtung, sowie rheologisch wirksame Mittel.

Die Härtung der Lacke erfolgt entsprechend den in den Lacken enthaltenen Bindemitteln, wie dies dem Fachmann bekannt ist. Besonders vorteilhaft wirken sich die erfindungsgemäß verwendeten polyestermodifizierten Polysiloxane in hitzehärtbaren Lacken aus, da die erfindungsgemäß verwendeten polyestermodifizierten Polysiloxane sehr temperaturbeständig sind, z.B. unter Einbrennbedingungen bei Temperaturen bis zu 250 °C und bei relativ kurzen Einbrennzeiten sogar bei Temperaturen bis zu etwa 350 °C.

Für Formmassen gilt sinngemäß das gleiche, was oben hinsichtlich der Lacke gesagt wurde. Es werden hierunter Massen verstanden, die zu Formkörpern verarbeitet werden, wobei die in den Massen enthaltenen Reaktionsharze bzw. Bindemittel in der Regel bei erhöhter Temperatur nach und/oder während der Formgebung gehärtet werden. Formmassen im Sinne der Erfindung sind z.B. solche auf Basis von ungesättigten Polyesterharzen und Vinylharzen, diesen können auch Thermoplaste wie Polystyrol, Polyvinylacetat, Polymethylmethacrylat und Styrol-Butadien-Copolymeren, beispielsweise als schrumpfreduzierende Anteile zugesetzt werden. Weitere Formmassen sind insbesondere Polyurethane und Polyamide, welche z.B. im Reaktions-Spritzguß-Verfahren eingesetzt werden und ganz besondere Schwierigkeiten bezüglich der Entformbarkeit aufweisen.

Andere Formmassen können auch auf Basis von Epoxidharzen aufgebaut sein. Diese Epoxidharze werden bevorzugt auf dem Gebiet der Gießmassen und Pressmassen eingesetzt. Weitere Formmassen, welche z.B. nach dem Nasspressverfahren, Injektionsverfahren oder Profilziehverfahren verarbeitet werden können, sind die Phenol-Formaldehyd-Kondensationsharze, welche auch unter dem Begriff Phenolharze bekannt sind.

Die Formmassen im allgemeinen können ebenfalls die gemäß dem Stand der Technik üblichen Zusatzstoffe oder sonstige Bestandteile enthalten, wie sie auch oben hinsichtlich der Lacke bereits erwähnt wurden. Insbesondere können solche Formmassen Füllstoffe und/oder verstärkende Füllstoffe enthalten, wie z.B. Glasfasern, Kohlenstoff-Fasern und Polyamidfasern, Wollastonite, Silikate, anorganische Carbonate, Aluminiumhydroxid, Bariumsulfat und Kaoline, auch nanoskalige Füllstoffe auf Basis von Aluminiumoxid und Siliciumdioxid.

Die Menge der den Thermoplasten, Lacken und Formmassen zugesetzten polyestermodifizierten Polysiloxane ist so groß, daß der gewünschte Effekt hinsichtlich einer ausreichenden Förderung des Verlaufs, einer Erhöhung der Gleitfähigkeit und Verbesserung der Kratzfestigkeit erreicht wird. Es können sehr geringe Mengen ausreichen um einen merklichen Effekt zu erzielen, beispielsweise 0,005 Gew.-% bezogen auf das Gesamtgewicht der Lacke, Formmassen oder Thermoplaste. Üblicherweise beträgt der Gehalt an polyestermodifizierten Polysiloxanen mehr als 0,01 Gew.-% bevorzugt mehr als 0,05 Gew.-% bezogen auf das Gesamtgewicht der Thermoplaste, Lacke oder Formmassen. Die obere Grenze für dem Gehalt an polyestermodifizierten Polysiloxanen wird durch eine ausreichende Wirkung und den Wunsch die Menge möglichst gering zu halten gegeben, da es sich um hochwertige und teuere Produkte handelt, so daß aus Preisgründen ein übermäßiger Zusatz in der Regel vermieden wird. Die obere Grenze liegt im allgemeinen bei etwa 5 Gew.-%, vorzugsweise bei etwa 2 Gew.-% und besonders bevorzugt bei etwa 1 Gew.-%, bezogen auf das Gesamtgewicht der Thermoplasten, Lacke oder Formmassen.

Für die Verwendung in der Kunststoffindustrie sind polyestermodifizierte Polysiloxane vorteilhaft, deren Schmelzpunkt oberhalb 40 °C liegt, bevorzugt oberhalb 50 °C, da feste polyestermodifizierte Polysiloxane mit standardmäßiger Anlagentechnik in die Thermoplaste eingearbeitet werden können. Als Schmelzpunkt der erfindungsgemäßen polyestermodifizierten Polysiloxane gilt die mittels DSC (Differential Scanning Calorimetry; Differential-Kalorimetrie) ermittelte Temperatur (DIN 53765). Bei einer Auftragung des exothermen Wärmeflusses gegen die Temperatur gilt der Punkt der größten negativen Steigung der erhaltenen Kurve als Schmelzpunkt. Feste polyestermodifizierte Polysiloxane besitzen insbesondere den Vorteil, daß diese als Pulver, Pellets, Schuppen, Granulate oder in anderer Form dem Verarbeitungsprozess zugeführt werden können.

Die folgenden Beispiele erläutern die Erfindung ohne beschränkend zu wirken.

### BEISPIELE

### Beispiel 1:

In einem Reaktionsgefäß mit Rührer und Rückflusskühler wurden 406,8 g (0,25 mol) eines Polysiloxans der mittleren Durchschnittsformel 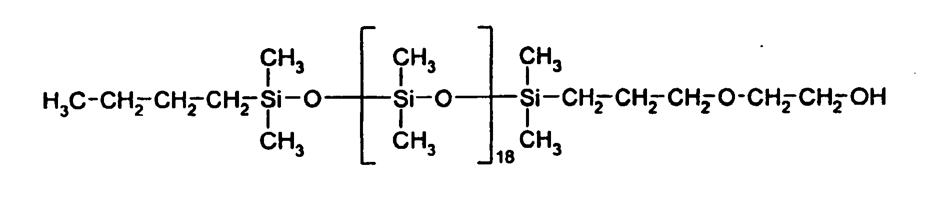 mit 742,0 g (6,5 mol) ε-Caprolacton versetzt und nach Zugabe von 100 ppm Dibutylzinndilaurat unter Stickstoff auf 180 °C erhitzt. Nach 6 Stunden Reaktionszeit wurde das Reaktionsgemisch auf 80 °C abgekühlt und mit 460,0 g Shellsol A versetzt. Anschließend wurden 73,9 g (0,25 mol) Stearylisocyanat zugegeben und weitere 30 min bei 80 °C gerührt. Durch Anlegen von Vakuum (40 mbar) und Erhöhen der Temperatur auf 160 °C wurde das Lösemittel aus der Reaktionsmischung entfernt. Als Produkt resultierte ein wachsartiger Feststoff mit einem Schmelzpunkt von 53 °C.

### Beispiel 2 (nicht erfindungsgemäß):

In einem Reaktionsgefäß mit Rührer und Rückflusskühler wurden 507,5 g (0,25 mol) eines Polysiloxans der mittleren Durchschnittsformel 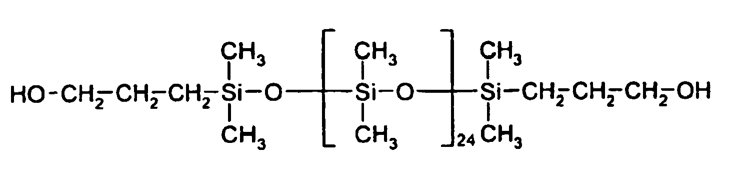 mit 742,0 g (6,5 mol) ε-Caprolacton versetzt und nach Zugabe von 100 ppm Dibutylzinndilaurat unter Stickstoff auf 180 °C erhitzt. Nach 6 Stunden Reaktionszeit wurde das Reaktionsgemisch auf 80 °C abgekühlt und mit 460,0 g Shellsol A versetzt. Anschließend wurden 147,8 g (0,5 mol) Stearylisocyanat zugegeben und weitere 30 min bei 80 °C gerührt. Durch Anlegen von Vakuum (40 mbar) und Erhöhen der Temperatur auf 160 °C wurde das Lösemittel aus der Reaktionsmischung entfernt. Als Produkt resultierte ein wachsartiger Feststoff mit einem Schmelzpunkt von 51 °C.

### Anwendungsbeispiel:

In 100 g einer 10 %igen Lösung aus Polymethylmethacrylat in Ethylacetat wurden 0,05 g des Produktes aus Beispiel 1 aufgelöst. Auf einer 100x250 mm² großen Glasplatte wurde ein 200 µm starker Film hergestellt. Nach Entfernung des Lösemittels resultierte eine Beschichtung mit einer Schichtdicke von ca. 20 µm. In analoger Weise wurde mit dem Produkt aus Beispiel 2 verfahren. Als Vergleichsprobe diente eine entsprechende Beschichtung auf Glas ohne Additiv. Zur Messung des Gleitwiderstandes wurde ein elektrisches Filmaufziehgerät mit konstantem Vorschub verwendet. Auf der Halterung für das Filmziehlineal wurde ein Zugdruck Kraftaufnehmer befestigt, der über einen Computer jeden Widerstand, der dem Gleitkörper entgegensteht, aufzeichnet. Der Gleitkörper wird in Zugrichtung über die zu messende Oberfläche bewegt. Als Gleitkörper wurde ein 500 g Gewichtsstein mit einer definierten Filzunterlage verwendet.
Die Beurteilung der Transparenz/Eintrübung der Beschichtungen wurde rein visuell vorgenommen. Die Randwinkelmessung erfolgte mit einem Kontaktwinkelmessgerät der Firma Krüss. Gemessen wurde der Fortschreitwinkel des Wassertropfens auf dem Prüfkörper im Bereich zwischen 8-12µl Tropfenvolumen. Die Kratzfestigkeit wurde mittels des Bleistifthärte-Tests in Anlehnung an die DIN EN 13523-4 bestimmt.

**Tabelle**

| Probe | Gleitwiderstand in Newton | Transparenz | Bleistifthärte in Anlehnung an DIN EN13523-4 | Randwinkelmessung mit Wasser |
|---|---|---|---|---|
| Vergleichsprobe | 5,3 | transparent | H | 76° |
| Beispiel 1 | 1,7 | transparent | 4H | 94° |
| Beispiel 2 (nicht erfindungsgemäß) | 4,1 | transparent | 2H | 86° |

### Beispiel 3

In einem Reaktionsgefäß mit Rückflusskühler wurden 507 g (0,5 mol) eines ungesättigten Polyesters der durchschnittlichen Formel 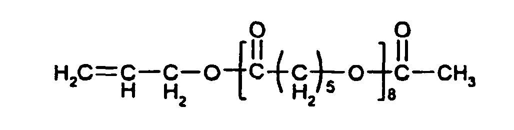 mit 1798 g (0,45 mol) eines Polysiloxans der durchschnittlichen Formel 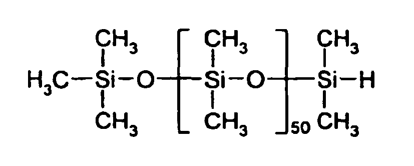 und 988 g Xylol miteinander unter Stickstoffatmosphäre gemischt und auf 100 °C erwärmt. Anschließend wurden 1,4 g einer 6 %igen Lösung von Hexachloroplatinsäure in 2-Propanol zugegeben. Nach einer Reaktionsdauer von 3 Stunden wurde das Lösemittel im Vakuum (40 mbar, 180 °C) abgetrennt.

### Beispiel 4:

In einem Reaktionsgefäß mit Rückflusskühler wurden 57,1 g (0,1 mol) eines ungesättigten Polyesters der mittleren Durchschnittsformel 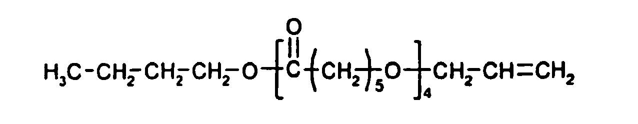 mit 51,9 g (0,1 mol) eines Siloxans der mittleren Durchschnittsformel 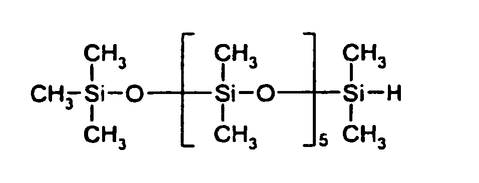 gemischt, mit 25 g Xylol versetzt und unter Schutzgas auf 70 °C erwärmt. Nach einer Reaktionszeit von zwei Stunden wurde das Lösemittel im Vakuum (20 mbar, 130 °C) entfernt.

### Beispiel 5:

In einem Reaktionsgefäß mit Rührer und Rückflusskühler wurden 274,1 g (0,25 mol) eines Polysiloxans der mittleren Durchschnittsformel 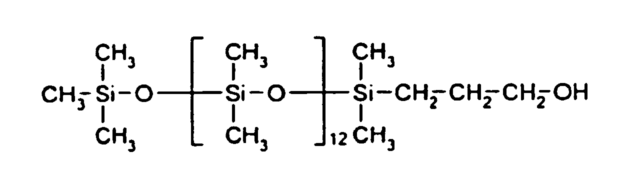 mit einer Mischung aus 131,3 g (1,15 mol) ε-Caprolacton und 115,2 g (1,15 mol) δ-Valerolacton versetzt und nach Zugabe von 100 ppm Dibutylzinndilaurat unter Stickstoff auf 160 °C erhitzt. Nach 6 Stunden Reaktionszeit wurde das Reaktionsgemisch auf 60 °C abgekühlt und mit 0,3 mol Essigsäureanhydrid und 200 ppm 4-Dimethylaminopyridin versetzt und weitere 30 min bei 60 °C gerührt. Anschließend wurde durch Anlegen von Vakuum (10 mbar) die entstandene Essigsäure und das verbliebene Essigsäureanhydrid aus der Reaktionsmischung entfernt.

## Patentansprüche

1. Polyestermodifizierte Polysiloxane der allgemeinen Formel (1): 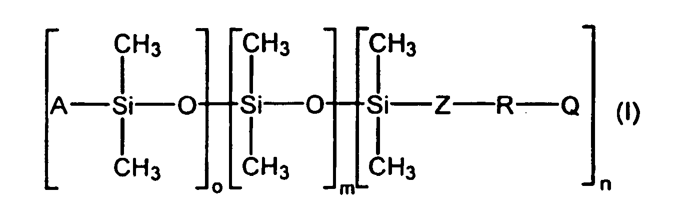 wobei,
A eine Alkylgruppe mit 1 bis 8 Kohlenstoffatomen darstellt, Z eine aliphatische Gruppe mit 1 bis 14 Kohlenstoffatomen darstellt, R eine mindestens 3 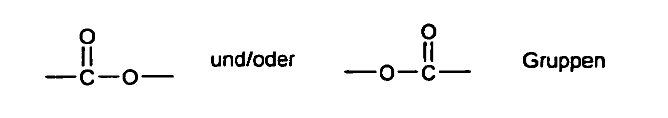 enthaltende aliphatische und/oder cycloaliphatische und/oder aromatische Polyestergruppe mit einem gewichtsmittleren Molekulargewicht von 200 bis 4000 g/mol ohne Zerewitinoff-Wasserstoffatome darstellt, Q eine Gruppe darstellt, die keine Zerewitinoff-Wasserstoffatome enthält und frei von reaktiven Kohlenstoff-Kohlenstoff-Mehrfachbindungen ist, und wobei m gleich 3 bis 200 und o + n = 2 ist, wobei sowohl o als auch n ungleich Null sind.

2. Polyestermodifizierte Polysiloxane gemäß Anspruch 1 wobei,
A eine lineare Alkylgruppe mit 1 bis 4 Kohlenstoffatomen darstellt,
Z gewählt wird aus der Gruppe bestehend aus einer Alkylengruppe mit 1 bis 14 Kohlenstoffatomen, einer Alkylenether- oder Alkylenthioether-Gruppe mit 2 bis 14 Kohlenstoffatomen und einer Alkylen-Amid-Gruppe mit 2 bis 14 Kohlenstoffatomen;
die mindestens 3 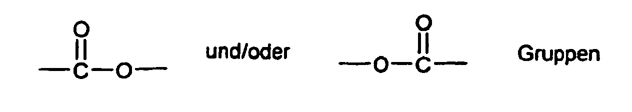 im Rest R durch zweiwertige Kohlenwasserstoffgruppen mit 2 bis 12 Kohlenstoffatomen miteinander verbunden sind;
Q einen Rest -(O)-(CO)ₚ-(NH)_{q}-(CHR¹)ᵣ-(CHR²)ₛ-(O)ₜ-CR³R⁴R⁵ dargestellt, worin p, q, r, s und t unabhängig voneinander 0 oder 1 sind und worin R¹, R², R³, R⁴ und R⁵ unabhängig voneinander Wasserstoff sind oder einen linearen oder verzweigten Alkylrest mit 1 bis 18 Kohlenstoffatomen bedeuten oder R¹ und R³, im Fall von p=q=0, zusammen einen divalenten Rest -CH₂-CH₂- bilden; und
o und n im statistischen Mittel jeweils nicht mehr als 0,5 vom Wert 1 abweichen.

3. Polyestermodifizierte Polysiloxane gemäß einem der Ansprüche 1 oder 2,
wobei die mindestens 3 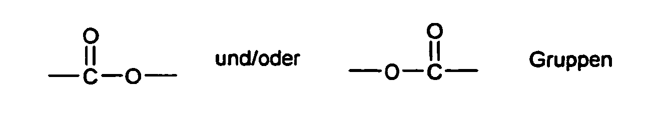 im Rest R durch zweiwertige Kohlenwasserstoffgruppen mit 4 bis 6 Kohlenstoffatomen miteinander verbunden sind.

4. Polyestermodifizierte Polysiloxane gemäß einem der Ansprüche 1, 2 oder 3, wobei R für eine Polycaprolactongruppe, Polyvalerolactongruppe oder für die Gruppe eines Copolymers aus Caprolacton und Valerolacton steht.

5. Polyestermodifizierte Polysiloxane gemäß einem der Ansprüche 2, 3 oder 4, wobei q, r, s und t = 0 sind, p = 1 oder 0 ist, R⁴ und R⁵ Wasserstoff sind und R³ ein linearer Alkylrest mit 1 bis 18 Kohlenstoffatomen ist; oder
wobei p und q = 0 sind, r, s und t = 1 sind, R¹ und R³ einen -CH₂-CH₂- Rest bilden und R², R⁴ und R⁵ Wasserstoff sind; oder
wobei p und q = 0 sind, r, s und t = 1 sind, R¹, R², R⁴ und R⁵ Wasserstoff sind und R³ ein linearer Alkylrest mit 1 bis 18 Kohlenstoffatomen ist.

6. Polyestermodifizierte Polysiloxane gemäß einem der Ansprüche 1 bis 5, die einen Schmelzpunkt von mindestens 40 °C besitzen.

7. Verwendung eines oder mehrerer polyestermodifizierter Polysiloxane der allgemeinen Formel (I) nach einem der Ansprüche 1 bis 6 als Additiv in Thermoplasten, Formmassen und Lacken.

8. Verfahren zur Förderung des Verlaufs, zur Erhöhung der Gleitfähigkeit und Kratzfestigkeit von Thermoplasten, Formmassen und Lacken, **dadurch gekennzeichnet, daß** den Thermoplasten, Formmassen und Lacken eine wirksam den Verlauf fördernde, die Gleitfähigkeit und Kratzfestigkeit erhöhende Menge an einem oder mehreren polyestermodifizierten Polysiloxanen der allgemeinen Formel (I) nach einem der Ansprüche 1 bis 6 zugesetzt wird.

9. Verfahren nach Anspruch 8, wobei die wirksame Menge der polyestermodifizierten Polysiloxane 0,005 bis 5 Gew.-%, bezogen auf das Gesamtgewicht der Thermoplaste, Formmassen und Lacke beträgt.

10. Thermoplaste, Lacke und Formmassen enthaltend ein oder mehrere polyestermodifizierte Polysiloxane der allgemeinen Formel (I) nach einem der Ansprüche 1 bis 6.

11. Thermoplaste gemäß Anspruch 10, wobei diese in Form thermoplastischer Fasern vorliegen.

## Claims

1. Polyester-modified polysiloxanes of the general formula (I) 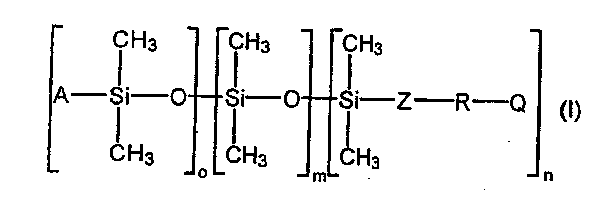 where
A is an alkyl group having 1 to 8 carbon atoms, Z is an aliphatic group having 1 to 14 carbon atoms, R is an aliphatic and/or cycloaliphatic and/or aromatic polyester group containing at least 3 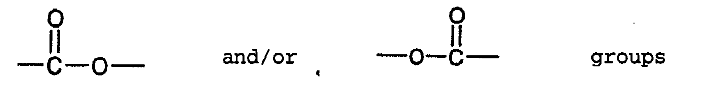 and having a weight-average molecular weight of 200 to 4000 g/mol, with no Zerewitinoff hydrogen atoms, Q is a group which contains no Zerewitinoff hydrogen atoms and is free from reactive carbon-carbon multiple bonds, m is 3 to 200 and o + n = 2, with both o and n being other than zero.

2. Polyester-modified polysiloxanes according to Claim 1, wherein
A is a linear alkyl group having 1 to 4 carbon atoms, z is selected from the group consisting of an alkylene group having 1 to 14 carbon atoms, an alkylene ether or alkylene thioether group having 2 to 14 carbon atoms and an alkylene-amide group having 2 to 14 carbon atoms;
the at least 3 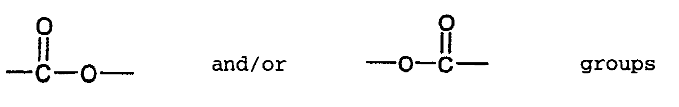 in the radical R are joined to one another by divalent hydrocarbon groups having 2 to 12 carbon atoms;
Q is a radical
-(O)-(CO)ₚ-(NH)_{q}-(CHR¹)ᵣ-(CHR²)ₛ-(O)ₜ-CR³R⁴R⁵ in which p, q, r, s and t independently of one another are 0 or 1 and in which R¹, R², R³, R⁴ and R⁵ independently of one another are hydrogen or a linear or branched alkyl radical having 1 to 18 carbon atoms, or R¹ and R³ if p = q = 0, together form a divalent radical -CH₂-CH₂-; and
o and n deviate on average in each case from a value of 1 by not more than 0.5.

3. Polyester-modified polysiloxanes according to either of Claims 1 and 2, wherein the at least 3 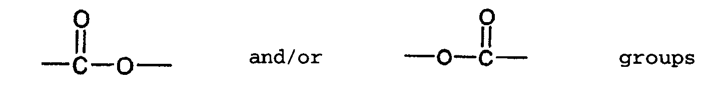 in the radical R are joined to one another by divalent hydrocarbon groups having 4 to 6 carbon atoms.

4. Polyester-modified polysiloxanes according to any one of Claims 1, 2 and 3, wherein R is a polycaprolactone group, a polyvalerolactone group or the group of a copolymer of caprolactone and valerolactone.

5. Polyester-modified polysiloxanes according to any one of Claims 2, 3 and 4, wherein q, r, s and t = 0, p = 1 or 0, R⁴ and R⁵ are hydrogen and R³ is a linear alkyl radical having 1 to 18 carbon atoms; or
wherein p and q = 0, r, s and t = 1, R¹ and R³ form a -CH₂-CH₂- radical and R², R⁴ and R⁵ are hydrogen; or
wherein p and q = 0, r, s and t = 1, R¹, R², R⁴ and R⁵ are hydrogen and R³ is a linear alkyl radical having 1 to 18 carbon atoms.

6. Polyester-modified polysiloxanes according to any one of Claims 1 to 5, possessing a melting point of at least 40°C.

7. Use of one or more polyester-modified polysiloxanes of the general formula (I) according to any one of Claims 1 to 6 as an additive in thermoplastics, moulding compounds and coating materials.

8. Method of promoting flow, increasing lubricity and scratch resistance of thermoplastics, moulding compounds and coating materials, **characterized in that** an effectively flow-promoting, lubricity- and scratch-resistance-increasing amount of one or more polyester-modified polysiloxanes of the general formula (I) according to any one of Claims 1 to 6 is added to the thermoplastics, moulding compounds and coating materials.

9. Method according to Claim 8, wherein the effective amount of the polyester-modified polysiloxanes is 0.005% to 5% by weight, based on the total weight of the thermoplastics, moulding compounds and coating materials.

10. Thermoplastics, coating materials and moulding compounds comprising one or more polyester-modified polysiloxanes of the general formula (I) according to any one of Claims 1 to 6.

11. Thermoplastics according to Claim 10, in the form of thermoplastic fibres.

## Revendications

1. Polysiloxanes modifiés par un polyester de formule générale (I) : 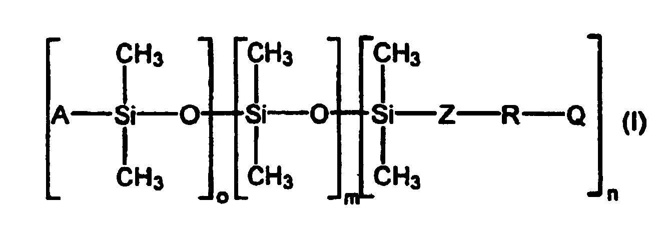 dans lesquels,
A représente un groupement alkyle avec 1 à 8 atomes de carbone, Z représente un groupement aliphatique avec 1 à 14 atomes de carbone, R représente un groupement polyester aliphatique et/ou cycloaliphatique et/ou aromatique contenant au moins 3 groupements 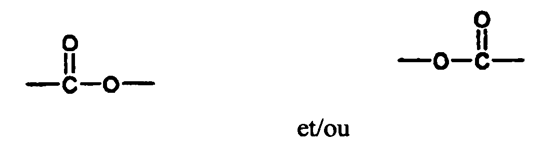 avec un poids moléculaire moyen en poids de 200 à 4000 g/mol sans atome d'hydrogène selon le test de Zerewitinoff, Q représente un groupement qui ne contient aucun atome d'hydrogène selon le test de Zerewitinoff et est exempt de liaisons multiples réactives carbone-carbone, et dans lesquels m est compris entre 3 et 200 et o + n = 2, et dans lesquels aussi bien o que n sont différents de zéro.

2. Polysiloxanes modifiés par un polyester selon la revendication 1 dans lesquels :
A représente un groupement alkyle linéaire avec 1 à 4 atomes de carbone,
Z est choisi dans le groupe constitué d'un groupement alkylène avec 1 à 14 atomes de carbone, d'un groupement alkylène-éther ou alkylène-thioéther avec 2 à 14 atomes de carbone et d'un groupement alkylène-amide présentant 2 à 14 atomes de carbone ; les au moins 3 groupements 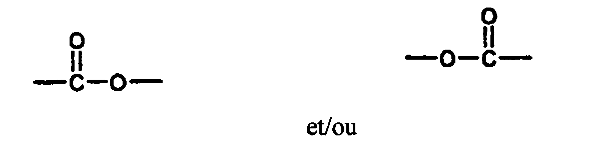
dans le résidu R sont liés les uns aux autres par des groupements hydrocarbures divalents avec 2 à 12 atomes de carbone ;
Q représente un résidu -(O)-(CO)p-(NH)q-(CHR¹)r-(CHR²)s-(O)t-CR³R⁴R⁵,
dans lequel p, q, r, s et t sont 0 ou 1 indépendamment les uns des autres, et dans lequel R¹, R², R³, R⁴ et R⁵ représentent indépendamment les uns des autres un hydrogène ou un résidu alkyle linéaire ou ramifié avec 1 à 18 atomes de carbone ou R¹ et R³, dans le cas où p = q = 0, forment ensemble un résidu divalent -CH₂-CH₂- ; et
o et n ne s'écartent pas statistiquement de plus de 0,5 de la valeur 1.

3. Polysiloxanes modifiés par un polyester selon l'une des revendications 1 ou 2, dans lesquels les au moins 3 groupements 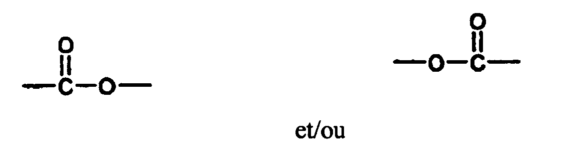 dans le résidu R sont liés les uns aux autres par des groupements hydrocarbures divalents avec 4 à 6 atomes de carbone.

4. Polysiloxanes modifiés par un polyester selon l'une des revendications 1, 2 ou 3, dans lesquels R est un groupement polycaprolactone, un groupement polyvalérolactone ou le groupement d'un copolymère de caprolactone et de valérolactone.

5. Polysiloxanes modifiés par un polyester selon l'une des revendications 2, 3 ou 4, dans lesquels q, r, s et t = 0, p = 1 ou 0, R⁴ et R⁵ sont de l'hydrogène et R³ est un résidu alkyle linéaire avec 1 à 18 atomes de carbone ; ou
dans lesquels p et q = 0, r, s et t = 1, R¹ et R³ forment un résidu -CH₂-CH₂- et R², R⁴ et R⁵ sont de l'hydrogène ; ou
dans lesquels p et q = 0, r, s et t = 1, R¹, R², R⁴ et R⁵ sont de l'hydrogène et R³ est un résidu alkyle linéaire avec 1 à 18 atomes de carbone.

6. Polysiloxanes modifiés par un polyester selon l'une des revendications 1 à 5, lesquels possèdent un point de fusion d'au moins 40 °C.

7. Utilisation d'un ou de plusieurs polysiloxanes modifiés par un polyester de formule générale (I) selon l'une des revendications 1 à 6 comme additif dans des matières thermoplastiques, des matériaux de moulage et des vernis.

8. Procédé pour la facilitation de l'écoulement, pour l'augmentation de la capacité d'obtention d'une surface plane et de la résistance à l'abrasion de matières thermoplastiques, de matériaux de moulage et de vernis, **caractérisé en ce qu'**est ajoutée aux matières thermoplastiques, matériaux de moulage et vernis une quantité facilitant efficacement l'écoulement, augmentant la capacité d'obtention d'une surface plane et la résistance à l'abrasion d'un ou plusieurs polysiloxanes modifiés par un polyester de formule générale (I) selon l'une des revendications 1 à 6.

9. Procédé selon la revendication 8, dans lequel la quantité efficace des polysiloxanes modifiés par un polyester est de 0,005 à 5 % en poids rapporté au poids total des matières thermoplastiques, matériaux de moulage et vernis.

10. Matières thermoplastiques, matériaux de moulage et vernis contenant un ou plusieurs polysiloxanes modifiés par un polyester de formule générale (I) selon l'une des revendications 1 à 6.

11. Matières thermoplastiques selon la revendication 10, dans lesquelles celles-ci sont présentes sous forme de fibres thermoplastiques.
